# EUROPEAN PATENT APPLICATION

(11) **EP 0 710 859 A1**
(43) Date of publication of application: **08.05.1996**
(21) Application number: 95116829.3
(22) Date of filing: 25.10.1995
(51) Int. Cl.: G02B 6/28

(54) **Method for producing optical fiber coupler**

(30) Priority: 25.10.1994 JP 260458/94; 06.10.1995 JP 259644/95
(71) Applicant: SUMITOMO ELECTRIC INDUSTRIES, LTD., Osaka-shi, Osaka 541 (JP)
(72) Inventor: Kobayashi, Yuji, Yokohama Works of Sumitomo, Yokohama-shi, Kanagawa (JP); Semura, Shigeru, Yokohama Works of Sumitomo, Yokohama-shi, Kanagawa (JP); Sasaoka, Eisuke, Yokohama Works of Sumitomo, Yokohama-shi, Kanagawa (JP); Ishiguro, Yoichi, Yokohama Works of Sumitomo, Yokohama-shi, Kanagawa (JP); Moriya, Tomomi, Yokohama Works of Sumitomo, Yokohama-shi, Kanagawa (JP)
(74) Representative: Grünecker, Kinkeldey, Stockmair & Schwanhäusser Anwaltssozietät

(57) **Abstract**

In a method for producing an optical fiber coupler, at least two optical fibers are prepared, and a part of a coating of the optical fibers are removed to expose glass portions thereof. Then, the optical fibers are arranged in parallel to each other, and clamped by clampers. Thereafter, the optical fibers are fused and heated collectively so as to form an optical fiber coupler. Finally, the optical fiber coupler is fixed on a reinforcing material while a tension equal to or more than 15g is applied to the optical fiber coupler. Further, 2n optical fibers may be prepared to produce n optical fiber couplers, where n is a natural number.

## Description

### BACKGROUND OF THE INVENTION

### 1. Field of the Invention

The present invention relates to a method for producing a optical fiber coupler.

### 2. Description of the Related Art

An optical fiber coupler is generally produced by a fusion-pulling method. The fusion-pulling method includes the steps of: removing part of coatings of optical fibers so as to expose respective glass portions; heat-fusing the optical fibers in the twisted state or in the parallel-arranged state; pulling the thus fused optical fibers while further heating them; and stopping the pulling at the point of time when a characteristic such as a branching ratio or the like reaches a predetermined value, thereby forming coupling portion. In such an optical fiber coupler having fusion-pulled portions as described above, since the coupling portion is made of bare glass fibers, these portions are required to be protected from external factors such as external stress and the like.

As a conventional reinforcing structure in an optical fiber coupler, there is such a proposal as disclosed in Unexamined Japanese Patent Publication No. Sho-63-271208, in which only a pulled portion (a thin fused portion) is in a state of being suspended in space and not-pulled portions (thick fused portions) provided on the opposite sides of the thin fused portion are fixed on a casing (a zig) by using an adhesive. Further, as disclosed in Unexamined Japanese Patent Publication No. Sho-63-254406, there is known a reinforcing structure of a multicore optical fiber coupler in which comb-shaped fixing portions having a plurality of grooves are arranged on a substrate so as to be opposite to each other in the longitudinal direction, and a plurality of optical fiber couplers are disposed perpendicularly to the direction of arrangement of the two optical fibers and fixed by using an adhesive.

In such conventional reinforcing structures as described above, there has been a disadvantage in that since optical coupling portions often have no seal means for preventing water from entering from the outside, deterioration in strength, and changes in transmission loss may be generated at a high temperature or in water.

In the optical fiber coupler disclosed in Unexamined Japanese Patent Publication No. Hei-5-224062, disclosed is a reinforcing structure that a semicylindrical reinforcing material having a groove in the longitudinal direction is used, the optical fiber coupler is accommodated in the groove and fixed in the vicinity of end portions of the groove by using an adhesive, and the central portion of the reinforcing material is sealed with a cover. Thus, this optical fiber coupler hardly receives an influence of environmental change. In the optical fiber coupler disclosed in the above publication, however, only every coupling portion is individually protected but a multicore optical fiber coupler cannot be protected collectively as a whole.

When an optical fiber coupler is fixed on a reinforcing material, fixing is performed in a condition that tension in pulling is applied. In a fixing method disclosed in Unexamined Japanese Patent Publication No. Hei-5-115807, an optical fiber coupler is fixed on a reinforcing material while applying a tension in a range of 4 to 14g. The reinforcing material makes strain exerted on the optical fiber coupler change to cause fluctuations in characteristics because the reinforcing material expands/shrinks in accordance with a variation in temperature. When a material having a thermal expansion coefficient equal to that of glass portions of optical fibers is used for the reinforcing material, the coupling portion can be prevented from receiving strain due to a temperature change. From such a point of view, quartz is used as the material for the reinforcing material.

In such a reinforcing structure using a cover to secure the sealing property of a coupling portion, it is necessary to use an adhesive for sticking the cover onto a reinforcing material. When quartz is used for the reinforcing material and the cover, the thermal expansion coefficient of the adhesive is larger than that of the quartz to thereby deform the reinforcing material. Therefore, fluctuations in characteristics due to a temperature change cannot be avoided even in the case of using quartz.

Further, when a multicore optical fiber coupler is produced, it is not necessarily that a plurality of fibers strained between a pair of clamper are applied a equal tension respectively. This because an incorrect movement of the clamper during the change of the tension application. In addition, since heat is not applied uniformly to respective optical fiber couplers during the pulling, the tension is collectively applied to optical fibers which is not heated too much, thereby applying no equal tension to respective optical fiber couplers.

### SUMMARY OF THE INVENTION

It is an object of the present invention to provide a method for producing an optical fiber coupler in which fluctuations in characteristic due to temperature changes can be reduced.

A method for producing an optical fiber coupler according to the present invention is comprised of: preparing at least two optical fibers; removing a part of a coating of the optical fibers to expose glass portions thereof; arranging the optical fibers in parallel to each other; clamping the optical fibers on predetermined positions; fusing and pulling the optical fibers collectively so as to form an optical fiber coupler; fixing the optical fiber coupler on a reinforcing material while a tension equal to or more than 15g is applied to the optical fiber coupler.

Needless to say, even-numbered optical fibers may be prepared to form half of the even number optical fiber couplers. According to the present invention, it is possible to produce an optical fiber coupler in which fluctuations in characteristics due to temperature changes are reduced.

### BRIEF DESCRIPTION OF THE DRAWINGS

In the accompanying drawings;
Fig. 1 is a schematic diagram for explaining an embodiment of the method for producing an optical fiber coupler according to the present invention;
Fig. 2A is a plan view for explaining an embodiment of the optical fiber coupler protected by a reinforcing material;
Fig. 2B is a sectional view taken on line B-B in Fig. 2A;
Fig. 2C is a sectional view taken on line C-C in Fig. 2A;
Fig. 3 is a diagram for explaining the results of measurement in experiments; and
Fig. 4 is a table for explaining the results of measurement in experiments.

### DETAILED DESCRIPTION OF THE INVENTION

In the accompanying drawings, the detailed description of the present invention will be described referring to the accompanying drawings as follows.

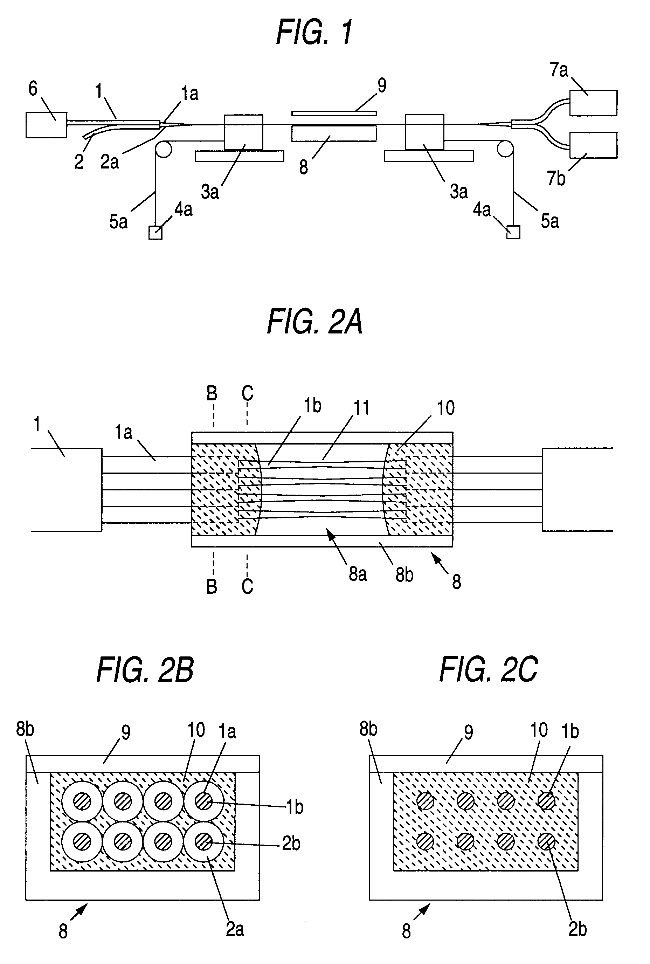

Fig. 1 is a schematic diagram for explaining an embodiment of a method for producing an optical fiber couplers according to the present invention. In the drawing, the reference numerals 1 and 2 designate tape-shaped optical fibers; 1a and 2a, core optical fibers; 3a and 3b, pulling stages; 4a and 4b, weights; 5a and 5b, strings; 6, a measurement light source; 7a and 7b, power meters; 8, a reinforcing material; and 9, a cover.

An optical fiber coupler is produced by using two tape-shaped optical fibers 1 and 2. In this embodiment, two sheets of 4-core tape-shaped optical fibers are used. The two sheets of tape-shaped optical fibers are made to face each other vertically. Since respective coupling portions are formed of glass portions of the optical fibers facing each other to thereby produce optical fiber couplers, four optical fiber couplers are produced at the same time in this embodiment where two sheets of 4-core tape-shaped optical fibers are used. The optical fiber to be used for the production is not limited to such a 4-core tape-shaped optical fiber, but any multicore optical fiber other than a 4-core tape-shaped optical fiber may be used. Further, the optical fiber to be used for the production is not limited to such a tape-shaped optical fiber, but a desired number of single-core optical fibers may be used. Further, the facing direction of the optical fiber cores is not limited to the vertical direction, but the cores may be made to face horizontally. It is however ordinary to make the cores face vertically in the case of using multicore tape-shaped optical fibers.

The strings 5a and 5b are attached to the pulling stages 3a and 3b and the weights 4a and 4b are attached, through pulleys, to the free ends the strings 5a and 5b, respectively. Predetermined tensile forces corresponding to the weights 4a and 4b are applied to the pulling stages 3a and 3b, respectively. The measurement light source 6 emits measurement light so as to be incident into one optical fiber core of one tape-shaped optical fiber 1. The coming-off light from the formed coupling portion is measured by using the power meters 7a and 7b which measures the branching ratio and the excess loss of respective optical fiber couplers. The reinforcing material 8 and the cover 9 are set after completion of the pulling process. That is, the reinforcing material 8 is made to rise from below so that the coupling portions are accommodated in the groove portion and then fixed there through an adhesive.

The producing method will be described. The respective taping layers of the tape-shaped optical fibers 1 and 2 are removed by predetermined length so that the core optical fibers 1a and 2a are exposed. The respective coatings of the core optical fibers 1a and 2a are removed by predetermined length so that the glass portions are exposed. The respective coated portions of the two core optical fibers 1a and 2a with their glass portions exposed are fixed on the pulling stages 3a and 3b respectively and the glass portions are clamped by using a clamper (not shown) so as to be made parallel to each other and then heat-fused by using a burner (not shown). Next, the clamp of the glass portions is released. While tensile forces are being applied to the pulling stages 3a and 3b by the weights 4a and 4b, the pulling stages 3a and 3b are moved to pull the glass portions which are being heated by the burner to thereby form the coupling portions. In accordance with progress of the pulling, the optical fiber is made thinner. Accordingly, the flow amount of burning gas is decreased so that the pulling speed is set to be a desirable speed. Therefore, an uniform tension is difficult to apply to each optical fiber. Consequently, inconsistent tensions are applied to respective optical fibers, so that large tension is applied collectively to an optical fiber which is heated worse than other optical fibers. In pulling, the light rays from the measurement light source 6 are made incident into one end of the one core optical fiber 1a and the coming-off light rays are monitored at the other ends of the core optical fibers 1a and 1b by using the power meters 7a and 7b. When a predetermined branching ratio is obtained, the pulling is stopped. In this case, the branching ratio can be determined by forecasting fluctuations due to the tension to be applied to the reinforcing material in advance.

The reinforcing material 8 is set from under the thus formed coupling portions to protect the coupling portions, and the coupling portions are accommodated in the groove portion of the reinforcing material 8. At this time, a predetermined weight may be added to each of the weights 4a and 4b or the weights are exchanged so as to apply tension larger than that to be applied in pulling. An adhesive is applied onto both sides of each of the coupling portions and the same adhesive is applied onto the upper surface of the reinforcing material 8. The cover is put from above and the adhesive is hardened so that the optical fiber couplers are protected by the reinforcing material 8 and the cover 9.

Fig. 2A is a plan view for explaining an embodiment of the multicore optical fiber coupler protected by a reinforcing material; Fig. 2B is a sectional view taken on line B-B of Fig. 2A; and Fig. 2C is a sectional view taken on line C-C of Fig. 2A. In the drawings, portions corresponding to those of Fig. 1 are correspondingly referenced and explanation thereof is omitted. The reference numerals 1b and 2b designate glass portions; 8a, a groove portion; 8b, a convex portion; 10, an adhesive; and 11, coupling portions. As a reinforcing material 8 and a cover 9, crystallized glass is used. Crystallized glass having a matrix glass portion (amorphous portion) of 15 % or less is large in strength and it is preferable to use crystallized glass having a matrix glass portion of 10 to 12 %. Quartz or other material also may be used.

In this embodiment, the reinforcing material 8 is provided with one groove portion 8a so as to collectively accommodate the four sets of the coupling portions 11. However, the number of the groove portion 8a of the reinforcing material 8 is not limited to one. In the case of accommodating four sets of optical fiber couplers, the reinforcing material 8 may be made to have four groove portions so as to accommodate the four sets of optical fiber couples respectively separately in the four groove portions. Alternatively, the reinforcing material 8 may be made to have two groove portions so as to accommodate two sets optical fiber couplers in each groove portion.

As the cover 9 for the reinforcing material 8, transparent crystallized glass may be used. If the cover 9 is transparent, an energy-setting adhesive such as an ultraviolet-setting adhesive may be used to shorten the hardening time. In this case, it is possible to harden the respective adhesives for fixing the coupling portions and the cover at the same time.

The coupling portions 11 are accommodated in the groove portion of the reinforcing material 8, and the portions from the glass portions 1b and 2b to the coating portions 1a and 2a on the opposite sides of each coupling portion 11 are fixed through the adhesive 10. Although an energy-setting adhesive may be used as the adhesive 10 as described above, a thermosetting adhesive or a reactive-type adhesive using a polymerizing agent may be used.

Incidentally, after finishing the pulling, while fixing the clamper, a part of each of the glass portions which is out of optical coupling parts is heated so that inconsistent tensions applied to respective optical fibers at a time of finish of the pulling is made uniformly. Thereafter, the tension in a range of 15g to 30g is newly applied to each of the optical fiber couplers, and the couplers are fixed in the reinforcing material. This method has an advantage that an uniform tension is applied to respective optical fiber couplers.

### Example

Now, description will be made as to a specific example of the foregoing embodiment. Two sheets of 4-core tape-shaped optical fibers in each of which four cores of core optical fibers were collectively coated with a tape layer. In each core optical fiber, two layers of protective film were provided on a 1.3 µm band single mode optical fiber in which a difference in index of refraction between a core and a clad was 0.3 %, a core diameter was 8 µm and a clad diameter was 125 µm. The tape layers of the respective core optical fibers were partially removed and further the protection films of the same were partially removed. Exposed glass portions were put one on the other in parallel to each other and the glass portions of the core optical fibers of both the tape-shaped optical fibers facing each other were fused and pulled at this portion to thereby form a 4-core optical fiber coupler.

When the optical fiber coupler was be fixed on a reinforcing material, the optical fiber coupler was set in a groove portion of a white glass ceramic reinforcing material while changing the tension application conditions. That is, the tension to be applied to the coupling portions was changed, with respective to the tension of 5g which was the value in pulling, so that the tension was not increased, increased by 10g, increased by 12g, increased by 15g, increased by 20g, increased by 30g, and increased by 40g. An ultraviolet-setting adhesive was applied onto not-pulled portions of each of the optical fibers in the vicinity of the opposite ends of the groove portion and a transparent glass ceramic cover on which the ultraviolet-setting adhesive was thinly applied was stuck on the adhering surface. An ultraviolet rays were emitted from the light source so as to radiate the whole reinforcing material to thereby harden the adhesive to complete 4-core tape couplers.

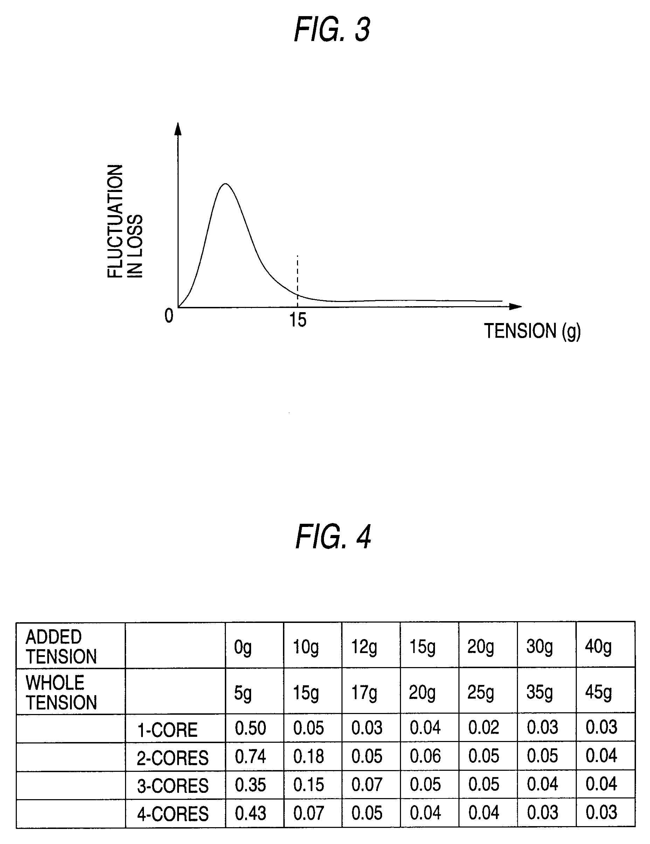

Fig. 3 is a characteristic diagram showing experimental results when a heat cycle test was performed by changing tension for fixing optical fiber couplers on a reinforcing material, and fluctuations in losses were measured. A heat cycle test of -40°C + 85°C was performed with respect to each of the 4-core tape couplers after production and fluctuations in losses were examined. That is, it was found that when tension of about 5g which was a value to be applied in the pulling process was applied in fixing the optical fiber couplers on the reinforcing material, fluctuations in losses due to temperature changes increased. When tension of about 15g was applied in fixing the optical fiber couplers on the reinforcing material, fluctuations in losses decreased. However, some optical fiber couplers had the variation of about 0.2dB. Further, in the condition that tension not smaller than 20g which was a value to be applied in the pulling process was applied, the variations in losses were very small and were substantially constant, that is, did not relate to the tension.

If it is designed so that the-tension to be applied is collectively applied to the n sets of optical fiber couplers, the producing steps are simplified. Taking scattering in characteristics of individual optical fiber couplers which have been produced collectively into consideration, tension may be applied separately to every set of the optical fiber couplers.

The experimental results are explained more specifically. Fig. 4 is a table for explaining the experimental results. It was found that the fluctuations in losses increased in the coupler fixed on the reinforcing material in the case where no additional tension was given, that is, only 5g which was the tension in pulling was applied. When 10g which was the tension in pulling was added so that 15g of tension in pulling was applied uniformly to respective four optical fiber couplers, the fluctuations in losses were decreased but some optical fibers existed which has the fluctuation of about 0.2dB. Further, the fluctuations of the optical fiber couplers, which was added more than 20g of tension in pulling, extremely reduced. Also, when the tension exceeded 25g, it is found that the fluctuations in losses did not relate to the tension. Moreover, if the tension is too large, the coupling portion is damaged so as to be, for example, broken, and the upper limit of the tension to be applied is determined on the bases of the strength of the coupling portion. In order to guarantee the life of the optical fiber coupler, before being fixed to reinforcing material, it is necessary that the optical fiber coupler is applied a tension which is three or four times as large as the tension at the time of being fixed to the reinforcing material for several seconds so as to perform screening. Accordingly, the limitation of the tension is about 30g.

## Claims

1. A method for producing an optical fiber coupler comprising the steps of:
preparing at least two optical fibers;
removing a part of a coating of said optical fibers to expose glass portions thereof;
arranging said optical fibers in parallel to each other;
clamping said optical fibers on predetermined positions;
fusing and pulling said optical fibers collectively so as to form an optical fiber coupler;
fixing said optical fiber coupler on a reinforcing material while a tension equal to or more than 15g is applied to said optical fiber coupler.

2. A method for producing an optical fiber coupler according to claim 1, wherein 2n optical fibers are prepared to produce n optical fiber couplers, where n is a natural number.

3. A method for producing an optical fiber coupler according to claim 2, wherein said tension is applied collectively to said n sets of optical fiber couplers.

4. A method for producing an optical fiber coupler according to claim 2, wherein said tension is applied separately to respective optical fiber couplers.

5. A method for producing an optical fiber coupler according to claim 1, wherein said tension is in a range of 15g to 30g.

6. A method for producing an optical fiber coupler according to claim 2, further comprising the steps of:
after said fusing and pulling step, while clamping said optical fibers on predetermined positions, heating uniformly a part of each of said glass portions which is out of optical coupling parts so that inconsistent tensions applied to respective optical fibers at a time of finish of said pulling step is made uniformly; and
fixing said optical fiber coupler on a reinforcing material while newly applying a tension in a range of 15g to 30g to each of said optical fiber couplers.

7. A method for producing an optical fiber coupler according to claim 2, wherein said optical fiber couplers are fixed on a reinforcing material while a tension equal to or more than 15g is applied to said optical fiber couplers, respectively.

8. A method for producing an optical fiber coupler according to claim 2, wherein said optical fiber couplers are fixed on a reinforcing material while a tension equal to or more than 15g is applied to said optical fiber couplers, respectively.
